# EUROPÄISCHE PATENTSCHRIFT

(11) **EP 2 878 247 B1**
(45) Veröffentlichungstag und Bekanntmachung des Hinweises auf die Patenterteilung: **06.05.2020**
(21) Anmeldenummer: 14193038.8
(22) Anmeldetag: 13.11.2014
(51) Int. Cl.: A47J 43/07

(54) **Rührtopf mit einem einen Grenzschicht ablösend oberflächenstrukturierten Lagerkörper aufweisenden Rührwerk**
Mixing pot comprising a mixing unit with a surface-structured bearing body which interrupts a boundary layer
Pot ayant un agitateur présentant un palier à surface structurée séparant la couche limite

(30) Priorität: 28.11.2013 DE 102013113153
(43) Veröffentlichungstag der Anmeldung: 03.06.2015
(73) Patentinhaber: Vorwerk & Co. Interholding GmbH, 42275 Wuppertal (DE)
(72) Erfinder: Hilgers, Stefan, 45357 Essen (DE); Kemker, Uwe, 42105 Wuppertal (DE)
(74) Vertreter: Müller, Enno

(56) Entgegenhaltungen:
- DE-A1-102012 101 775
- US-A- 2 794 627

## Beschreibung

Die Erfindung betrifft zunächst einen Rührtopf nach den Merkmalen des Oberbegriffes des Anspruches 1. Weiter betrifft die Erfindung ein Rührwerk zur Verwendung in einem Rührtopf nach den Merkmalen des Oberbegriffes des Anspruches 4.

Ein Rührtopf ist u.a. aus der DE 10 2012 101 775 A1 bekannt. Der bekannte Rührtopf ist lösbarer Teil einer Küchenmaschine und besitzt eine von einem Deckel verschließbare Einfüllöffnung, einen sich an die Einfüllöffnung anschließenden, eine rotationssymmetrisch ausgebildete Wandung und einen der Einfüllöffnung gegenüberliegenden, ebenen Boden, der eine Öffnung hat, in der ein Rührwerk eingesteckt ist. Das Rührwerk besitzt einen Lagerkörper, der sich unter Zwischenlage einer Dichtung auf dem Boden des Rührtopfes abstützt und eine Rührwelle lagert, die von der Unterseite des Bodens abragt und von einem Antrieb in Drehung versetzt werden kann. Im Inneren des Rührtopfes ist die Rührwelle mit einem Rührkörper verbunden, der von zwei sich kreuzenden Messersätzen ausgebildet ist. Der Rührkörper hat eine glattwandige, insbesondere aus Metall bestehende Oberfläche, die eine Kegelstumpf-Mantelfläche ist. Glattwandige Flächen haben den Vorteil, sich gut zum Reinigen zu eignen. Wird das Rührwerk in Drehung versetzt, so bildet sich um den Lagerkörper eine Zirkulationsströmung aus, deren Hauptrichtung eine Kreisrichtung um die Drehachse des Rührkörpers ist. An der glattwandigen Oberfläche des Lagerkörpers bildet sich eine hydrodynamische laminare Grenzschicht aus. Für eine gute Durchmischung der sich im Rührtopf befindenden Flüssigkeit sind solche stationären Grenzschichten von Nachteil, da ein Massentransport quer zum Verlauf der Grenzschicht im Wesentlichen diffusionskontrolliert ist.

Aus der US-A-2,794,627 ist ein Rührtopf mit einem Rührwerk bekannt, das eine Kegelstumpf-Mantelfläche aufweist, die durch eine Schlüsselfläche bildende Abbruchkanten jeweils begrenzt ist. Die Kegelstumpf-Mantelfläche als solche ist durchgehend glattflächig gebildet.

Die Erfindung beschäftigt sich mit der Aufgabenstellung, die Strömungsverhältnisse in einem Rührtopf in Bezug auf das Rührwerk günstig zu beeinflussen und einen im Hinblick auf sich ausbildende Strömungsverhältnisse gestalteten Lagerkörper mit darin gelagerter Rührwelle anzugeben.

Diese Aufgabe ist zunächst beim Gegenstand des Anspruches 1 gelöst, wobei darauf abgestellt ist, dass die Oberfläche eine die Ausbildung einer laminaren Grenzschicht störende Oberflächenstruktur aufweist, wozu die Oberflächenstruktur eine Mehrzahl von einander in Strömungsrichtung beabstandet angeordnete Oberflächen-Strukturelemente in Form von Rippen oder Nuten, die sich in Richtung von Mantellinien der Kegelstumpf-Mantelfläche erstrecken, oder in Form von Einwölbungen oderAuswölbungen mit einer Höhe von 1 mm bis 3 mm, auf der ansonsten glatten Oberfläche aufweist, die knickfrei, gerundet oder unter Ausbildung einer Kante in die Kegelstumpf-Mantelfläche übergehen.

Die genannte Aufgabe ist weiter beim Gegenstand des Anspruches 4 gelöst, wobei darauf abgestellt ist, dass die Oberfläche eine die Ausbildung einer laminaren Grenzschicht störende Oberflächenstruktur aufweist, wozu die Oberflächenstruktur, eine Mehrzahl voneinander in Strömungsrichtung beabstandet angeordnete Oberflächen--Strukturelemente in Form von Rippen oder Nuten, die sich in Richtung von Mantellinien der Kegelstumpf-Mantelfläche erstrecken oder in Form von Einwölbungen oder Auswölbungen mit einer Höhe von 1 mm bis 3 mm auf der ansonsten glatten Oberfläche aufweist, die knickfrei, gerundet oder unter Ausbildung einer Kante in die Kegelstumpf-Mantelfläche übergehen.

Die Oberflächenstruktur kann an der Oberfläche eine Grenzschicht ablösen.

Die Nuten bilden lokale Vertiefungen. Die Rippen bilden lokale Erhöhungen. Die Einwölbungen oder Auswölbungen sind vereinzelt, das heißt voneinander beabstandet, auf der ansonsten glatten Oberfläche des Lagerkörpers angeordnet.

Auf der Kegelstumpf-Mantelfläche verlaufen Rippen oder Nuten, die sich in Richtung der Mantellinie erstrecken, also auf eine gedachte Kegelspitze zu gerichtet sind. Es ist aber auch möglich, gleichmäßig oder ungleichmäßig verteilte Vertiefungen oder Erhöhungen auf der Oberfläche des Lagerkörpers anzuordnen.

Es handelt sich um dreidimensionale Strukturen, deren Höhen 1 bis 3 mm betragen, um eine sich ansonsten an der Oberfläche des Lagerkörpers ausbildende Strömungsgrenzschicht zu zerstören.

Die dreidimensionalen Oberflächenstrukturen in der ansonsten glatten Oberfläche bilden lokale Störungen einer Strömung entlang der Oberfläche aus. Eine sich eventuell zwischen den einzelnen Störungen ausbildende laminare Grenzschicht löst sich an den Störungen ab. Stromabwärts der dreidimensionalen Strukturen bilden sich Wirbel aus. Die so ausgebildete Grenzschichtablösung sorgt für eine bessere Durchmischung der sich im Rührtopf befindenden Flüs sigkeit im Bereich der Oberfläche des Lagerkörpers. Im Bereich der Wirbelzonen, die sich zwischen den einzelnen dreidimensionalen Strukturen ausbilden, findet ein konvektiver Massentransport statt.

Ausführungsbeispiele werden nachfolgend anhand beigefügter Zeichnungen erläutert. Es zeigen:
- Fig. 1: eine Übersichtsdarstellung einer einen Rührtopf 1 aufweisenden Küchenmaschine,
- Fig. 2: vergrößert den Ausschnitt II-II als Ansicht auf einen Lagerkörper 7 eines ersten Ausführungsbeispiels,
- Fig. 3: den Lagerkörper mit Rührkörper des ersten Ausführungsbeispiels in einer perspektivischen Darstellung, wobei die Nuten der besseren Sichtbarkeit halber übertrieben tief und scharfkantig dargestellt sind,
- Fig. 4: eine Darstellung gemäß Figur 2 eines zweiten Ausführungsbeispiels,
- Fig. 5: eine perspektivische Darstellung des zweiten Ausführungsbeispiels, wobei die Vertiefungen der besseren Sichtbarkeit halber übertrieben tief und scharfkantig dargestellt sind,
- Fig. 6: eine Darstellung gemäß Fig. 2 eines dritten Ausführungsbeispiels, wobei die Rippen der besseren Sichtbarkeit halber übertrieben hoch und scharfkantig dargestellt sind, und
- Fig. 7: eine perspektivische Darstellung des dritten Ausführungsbeispiels.

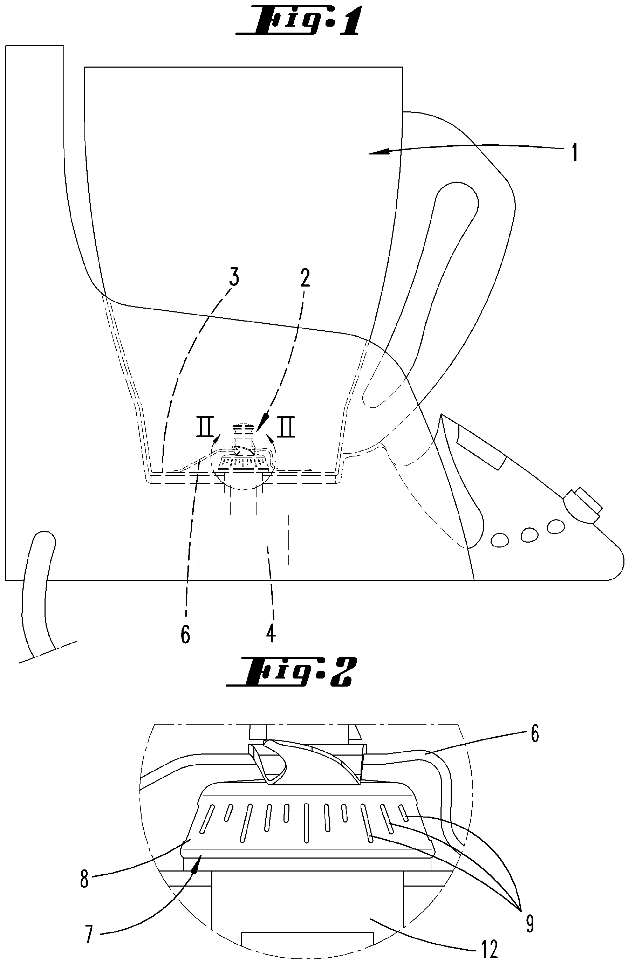

Die Figur 1 zeigt ein Küchengerät mit einem Gestell, welches einen Rührtopf 1 trägt. Der Rührtopf 1 besitzt eine Einfüllöffnung und einen der Einfüllöffnung gegenüberliegenden Boden 3. Der Boden 3 besitzt eine Durchgriffsöffnung, durch die ein Kupplungsfortsatz 12 bis über die Unterseite des Bodens ragt. Der Kupplungsfortsatz 12 steckt lösbar in einer Antriebskupplung, mit der der Kupplungsfortsatz 12 und eine fest mit dem Kupplungsfortsatz 12 verbundene Rührwelle 5 in eine Drehung gebracht werden kann. Der hierzu verwendete Antriebsmotor 4 steckt im Gerätegehäuse.

An ihrem freien, in den Rührtopf 1 ragenden Ende trägt die Rührwelle 5 einen Rührkörper, der im Ausführungsbeispiel von einem Messersatz mit zwei sich kreuzenden Messerarmen ausgebildet ist. Die Rührwelle 5 ist in einem Lagerkörper 7 gelagert, der sich auf dem Boden 3 abstützt. Er besitzt eine metallische Oberfläche 8. Der Lagerkörper 7 kann zusammen mit der Rührwelle 5 und dem Messersatz aus der Durchgriffsöffnung des Bodens 3 herausgenommen werden.

Eine Drehung der Rührwelle 5 beziehungsweise des Rührkörpers 6 versetzt eine sich im Rührtopf 1 befindende Flüssigkeit in Bewegung. Es bildet sich eine Zirkularströmung entlang der Innenwände des Rührtopfes 1 und entlang der kegelstumpfförmigen Oberfläche 8 des Lagerkörpers 7 aus.

Der Lagerkörper 7 besitzt einen Durchmesser von etwa 4 bis 5 cm und eine Höhe von 1 bis 2 cm. Beim Stand der Technik ist die auf einer Konusfläche verlaufende Oberfläche 8 des Lagerkörpers 7 glattwandig gestaltet. Dies hat zur Folge, dass die Zirkularströmung um die Drehachse A der Rührwelle 5 eine Strömungsgrenzschicht in einem Bereich unmittelbar oberhalb der Oberfläche 8 des Lagerkörpers 7 ausbildet.

Die in den Figuren 2 bis 7 dargestellten Ausführungsbeispiele eines Rührwerks 2 besitzen einen Lagerkörper 7, dessen mit der zu durchmischenden Flüssigkeit in Berührung tretende Oberfläche 8 dreidimensionale Strukturen 9,10,11 aufweist, die die Ausbildung einer Grenzschicht stören. Die Oberflächenstruktur besitzt eine Vielzahl von voneinander beabstandeten dreidimensionalen Strukturelemente/Störstellen 9,10,11. Zwischen den dreidimensionalen Strukturelemente 9,10,11 verläuft die Oberfläche 8 im Wesentlichen glattwandig.

Die dreidimensionalen Strukturelemente 9 bis 11 sind in den Figuren 2 bis 7 übertrieben hoch und übertrieben scharfkantig dargestellt. In ihrer bevorzugten Ausgestaltung bilden die dreidimensionalen Strukturelemente 9,10,11 eine zwar unebene, aber immer noch glattwandige Oberflächengestaltung, indem sie unter Ausbildung von Rundungen knickfrei in die Kegelstumpf-Oberfläche 8 des Lagerkörpers 7 übergehen. Hierdurch behält die Oberfläche 8 des Lagerkörpers eine gute Reinigbarkeit.

Durch die nicht ebene Oberflächenkontur können Verwirbelungen entstehen, so dass sich eine zwischen den dreidimensionalen Strukturen 9,10,11 ausbildende laminare Strömungsgrenzschicht an den dreidimensionale Strukturen 9 bis 11 ablöst. Es entstehen Verwirbelungen, die zu einer besseren Durchmischung des Mixgutes führen. Anders als beim Stand der Technik bildet sich keine einfache, an der Oberfläche 8 anliegende Strömung rundum den Lagerkörper 7 aus, bei der sich nahe der Oberfläche eine stationäre Strömungsgrenzschicht ausbildet. Die dreidimensionalen Strukturen können Nuten/ Rillen 9 sein. Es können aber auch inselartige Vertiefungen 10, Dellen oder aber auch Erhöhungen 11 sein. Die dreidimensionale Strukturen 9,10,11 können somit Einwölbungen oder Auswölbungen aus der ansonsten glatten Oberfläche 8 des Lagerkörpers 7 sein. Die dreidimensionale Strukturen 9,10,11 können in der Höhe variieren, so dass eine Strömung immer wieder umgelenkt wird. Feststoffe werden von der Oberfläche 8 gespült, bevor sie mit anderen Feststoffen zusammen größere Oberflächenverunreinigungen bilden. Es bildet sich eine turbulente Strömung aus, was zu einer besseren Durchmischung des Mixgutes führt.

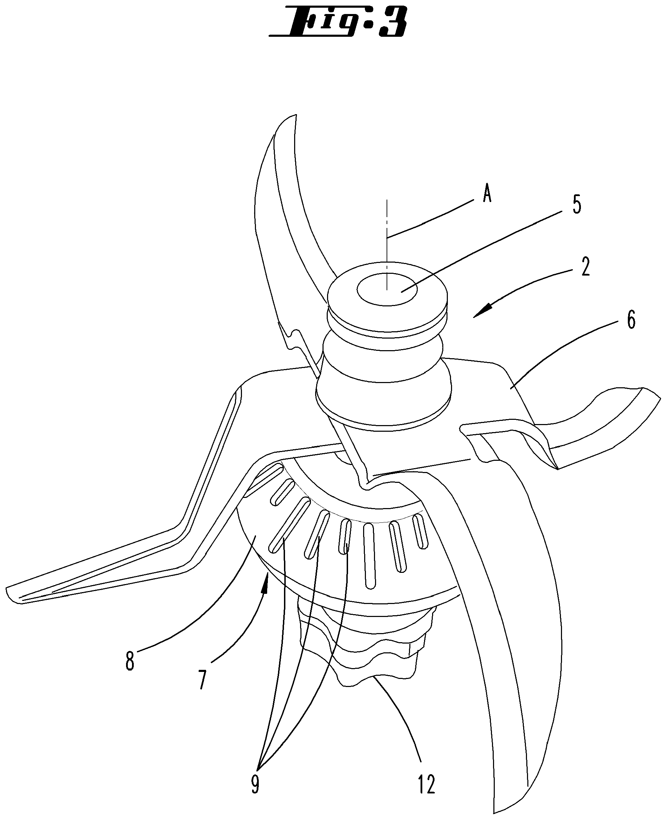

Bei dem in den Figuren 2 und 3 dargestellten Ausführungsbeispiel werden die eine Ausbildung einer Grenzschicht störenden Oberflächenstrukturen von Nuten/Rillen 9 ausgebildet, die sich entlang von Mantellinien der Kegelstumpf-Mantelfläche erstrecken. Die Nuten/Rillen 9 sind auf die gedachte Spitze des Kegelstumpfes gerichtet, der in der Drehachse A der Rührwelle 5 liegt. Es wechseln sich Nuten/Rillen 9 mit einer unterschiedlichen Länge ab. Die Nuten/Rillen 9 haben aber einen Abstand zu der vom Boden 3 entfernt liegenden Stirnseite des Lagerkörpers 7. Ihr Abstand zu der durchmessergroßen Randkante des Lagerkörpers 7 variiert in Umfangsrichtung des Lagerkörpers 7. Die dreidimensionalen Strukturen 9 sind etwa 0,5 bis 1,5 cm voneinander beabstandet, so dass sie stromabwärts der dreidimensionalen Strukturen 9 turbulente Wirbelzonen in der Flüssigkeitsströmung ausbilden. Die Tiefe der Nuten/Rillen 9 kann zwischen 1 und 3 mm betragen. Die Übergänge der Nuten in die Kegelstumpf-Mantelfläche 8 kann - wie in den Zeichnungen dargestellt - scharfkantig sein. Es ist aber bevorzugt vorgesehen, dass die Übergänge gerundet verlaufen.

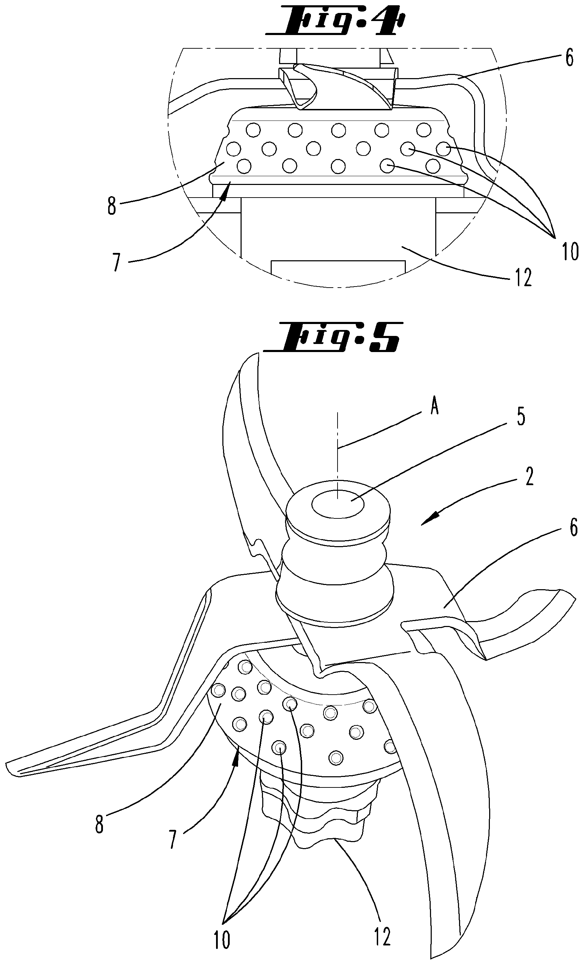

Bei dem in den Figuren 4 und 5 dargestellten zweiten Ausführungsbeispiel bestehen die dreidimensionalen, die Ausbildung einer Grenzschicht störenden Oberflächen-Strukturelemente aus einzelnen Vertiefungen/Einwölbungen 10. Im Ausführungsbeispiel haben die Einwölbungen 10 einen etwa kreisförmigen Grundriss und einen Durchmesser zwischen 0,3 und 1 cm. Die Einwölbungen 10 gehen unter Ausbildung einer Knicklinie in die Kegelstumpf-Mantelfläche 8 über. Auch hier ist bevorzugt vorgesehen, dass der Übergang von den Einwölbungen 10 in die Kegelstumpf-Mantelfläche 8 gerundet ist.

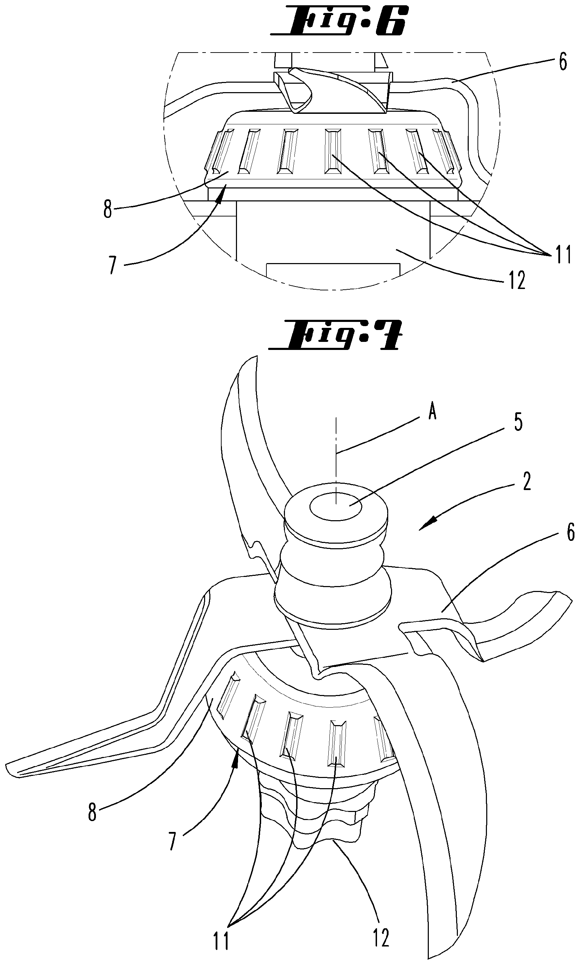

Anstelle von Einwölbungen 10 können die Oberflächen-Strukturelemente aber auch vereinzelte Auswölbungen sein. Die Auswölbungen können einen kreisförmigen Grundriss aufweisen. Sie können aber auch von Rippen ausgebildet werden, wie sie in den in den Figuren 6 und 7 dargestellten dritten Ausführungsbeispiel verwirklicht sind. Die Rippen erstrecken sich hier über die gesamte Höhe des kegelstumpfförmigen Oberflächenabschnittes 8 und entlang jeweils einer Mantellinie. Die Breite jeder Rippe 11 ist in Umfangsrichtung geringer als der Abstand zweier benachbarter Rippen 11. Die Rippen 11 sind pyramidenstumpfartig beziehungsweise prismatisch ausgebildet. Die im Wesentlichen ebenen Seitenflächen der Rippen 11 gehen unter Ausbildung von Knicklinien in die Kegelstumpf-Mantelfläche 8 beziehungsweise in Scheitelflächen der Rippen 11 über. Es ist bevorzugt vorgesehen, dass die Seitenflächen der Rippen gerundet in die Scheitelfläche und die Kegelstumpf-Mantelfläche 8 übergehen.

Bei in den in den Zeichnungen nicht dargestellten Ausführungsbeispielen gehen die dreidimensionalen Strukturen 9,10,11 jeweils unter Ausbildung von Rundungen aus der ansonsten glattwandigen Oberfläche 8 hervor. Sie sind entweder als Einwölbungen 9, 10 oder als Auswölbungen 11 ausgebildet. Bevorzugt haben die dreidimensionalen Strukturen nur gerundete Oberflächenabschnitte, damit sich eine leicht zu reinigende Lagerkörper-Oberfläche ausbildet.

Es ist aber auch vorgesehen, dass die dreidimensionalen Strukturen unter Ausbildung von Kanten gebildet sind. So können die dreidimensionalen Strukturen beispielsweise einen polygonartigen Grundriss auf ihren eingewölbten oder ausgewölbten Abschnitten Kanten aufweisen. Dies fördert die Ausbildung von Wirbelzonen.

### Bezugszeichenliste:

- 1: Rührtopf
- 2: Rührwerk
- 3: Boden
- 4: Antriebsmotor
- 5: Rührwelle
- 6: Rührkörper
- 7: Lagerkörper
- 8: Oberfläche
- 9: Nuten/ Rillen, Einwölbung
- 10: Einwölbung
- 11: Auswölbung, Rippe
- 12: Kupplungsfortsatz

- A: Drehachse

## Patentansprüche

1. Rührtopf (1) mit einem an einer Wandung (3) des Rührtopfes (1) angeordneten Rührwerk (2), das einen drehfest an der Wandung (3) zugeordneten Lagerkörper (7) zur Lagerung einer Rührwelle (5) zum Drehantreiben eines insbesondere einen Messersatz aufweisenden Rührkörpers (6) zur Ausbildung einer Zirkulationsströmung einer sich im Rührtopf (1) befindenden Flüssigkeit aufweist, wobei eine mit der Flüssigkeit in Berührung stehende, als Kegelstumpf-Mantelfläche ausgebildete Oberfläche (8) des Lagerkörpers (7) vorgesehen ist, **dadurch gekennzeichnet, dass** die Oberfläche (8) eine die Ausbildung einer laminaren Grenzschicht störende Oberflächenstruktur (9, 10,11) aufweist, wozu die Oberflächenstruktur (9,10,11) eine Mehrzahl voneinander in Strömungsrichtung beabstandet angeordnete Oberflächen-Strukturelemente in Form von Rippen (11) oder Nuten (9), die sich in Richtung von Mantellinien der Kegelstumpf-Mantelfläche erstrecken, oder in Form von Einwölbungen (9, 10) oder Auswölbungen (11) mit einer Höhe von 1 mm bis 3 mm, auf der ansonsten glatten Oberfläche (8) aufweist, die knickfrei, gerundet oder unter Ausbildung einer Kante in die Kegelstumpf-Mantelfläche übergehen.

2. Rührtopf nach Anspruch 1, **dadurch gekennzeichnet, dass** die Einwölbungen (10) und/oder die Auswölbungen (11) einen ovalen oder kreisförmigen Grundriss aufweisen.

3. Rührtopf nach einem der vorhergehenden Ansprüche, **dadurch gekennzeichnet, dass** die Oberflächenstrukturen (9,10,11) im Wesentlichen gleichmäßig über die Umfangsfläche des Lagerkörpers (7) verteilt angeordnet sind.

4. Rührwerk (2) zur Verwendung an einem Rührtopf (1), mit in einem Lagerkörper (7) gelagerter Rührwelle (5), die einen einen Messersatz aufweisenden Rührkörper (6) trägt, zur Ausbildung einer Zirkularströmung um den Lagerkörper (7), wobei die Oberfläche (8) des Lagerkörpers (7) als Kegelstumpf-Mantelfläche ausgebildet ist, **dadurch gekennzeichnet, dass** die Oberfläche (8) eine die Ausbildung einer laminaren Grenzschicht störende Oberflächenstruktur (9,10,11) aufweist, wozu die Oberflächenstruktur (9, 10, 11) eine Mehrzahl voneinander in Strömungsrichtung beabstandet angeordnete Oberflächen-Strukturelemente in Form von Rippen (11) oder Nuten (9), die sich in Richtung von Mantellinien der Kegelstumpf-Mantelfläche erstrecken oder in Form von Einwölbungen (9, 10) oder Auswölbungen (11) mit einer Höhe von 1 mm bis 3 mm auf der ansonsten glatten Oberfläche (8) aufweist, die knickfrei, gerundet oder unter Ausbildung einer Kante in die Kegelstumpf-Mantelfläche übergehen.

## Claims

1. Mixing pot (1) comprising a mixing mechanism (2) which is arranged on a wall (3) of the mixing pot (1) and has a mounting body (7) which is associated with the wall (3) in a rotationally fixed manner for mounting a mixing shaft (5) for rotating a mixing body (6), having in particular a set of blades, for forming a circulation flow of a liquid located in the mixing pot (1), a surface (8) of the mounting body (7) being provided which is in contact with the liquid and is designed as a truncated cone lateral surface, **characterised in that** the surface (8) has a surface structure (9, 10, 11) which disturbs the formation of a laminar boundary layer, for which purpose the surface structure (9, 10, 11) has a plurality of surface structure elements on the otherwise smooth surface (8) which are arranged so as to be spaced apart from one another in the flow direction and which are in the form of ribs (11) or grooves (9), which extend in the direction of lateral surface lines of the truncated cone lateral surface, or in the form of indentations (9, 10) or bulges (11) having a height of 1 mm to 3 mm, which transition into the truncated cone lateral surface without kinks, in a rounded manner or so as to form an edge.

2. Mixing pot according to claim 1, **characterised in that** the indentations (10) and/or the bulges (11) have an oval or circular outline.

3. Mixing pot according to any of the preceding claims, **characterised in that** the surface structures (9, 10, 11) are distributed substantially uniformly over the circumferential surface of the mounting body (7).

4. Mixing mechanism (2) for use on a mixing pot (1), comprising a mixing shaft (5) mounted in a mounting body (7), which shaft carries a mixing body (6) having a set of blades, for forming a circular flow around the mounting body (7), the surface (8) of the mounting body (7) being designed as a truncated cone lateral surface, **characterised in that** the surface (8) has a surface structure (9, 10, 11) which disturbs the formation of a laminar boundary layer, for which purpose the surface structure (9, 10, 11) has a plurality of surface structure elements on the otherwise smooth surface (8) which are arranged so as to be spaced apart from one another in the flow direction and which are in the form of ribs (11) or grooves (9), which extend in the direction of lateral surface lines of the truncated cone lateral surface, or in the form of indentations (9, 10) or bulges (11) having a height of 1 mm to 3 mm, which transition into the truncated cone lateral surface without kinks, in a rounded manner or so as to form an edge.

## Revendications

1. Pot d'agitation (1) avec un agitateur (2) agencé au niveau d'une paroi (3) du pot d'agitation (1) et qui présente un corps de palier (7) associé de manière solidaire en rotation à la paroi (3) pour le montage d'un arbre d'agitateur (5) pour l'entraînement en rotation d'un corps d'agitateur (6) présentant en particulier un jeu de lames pour former un courant de circulation d'un liquide se trouvant dans le pot d'agitation (1), dans lequel est prévu une surface (8) du corps de palier (7) en contact avec le liquide qui est réalisée sous la forme d'une surface d'enveloppe tronconique, caractérisé en ce en ce que la surface (8) présente une structure de surface (9, 10, 11) qui perturbe la formation d'une couche limite laminaire, la structure de surface (9, 10, 11) présentant à cet effet une pluralité d'éléments de structure de surface agencés sur la surface (8) par ailleurs lisse, à distance les uns des autres dans la direction de l'écoulement, sous la forme de nervures (11) ou de rainures (9) qui s'étendent dans la direction de génératrices de la surface tronconique, ou sous forme de renfoncements (9, 10) ou de renflements (11) d'une hauteur de 1 mm à 3 mm, et qui se raccordent à la surface d'enveloppe tronconique sans pli de manière arrondie ou en formant une arête.

2. Pot d'agitation selon la revendication 1, **caractérisé en ce que** les renfoncements (10) et/ou les renflements (11) présentent un plan de base ovale ou circulaire.

3. Pot d'agitation selon l'une des revendications précédentes, **caractérisé en ce que** les structures de surfaces (9, 10, 11) sont agencées de manière à être sensiblement réparties régulièrement sur la surface périphérique du corps de palier (7).

4. Agitateur (2) destiné à être utilisé au niveau d'un pot d'agitation (1), avec un arbre d'agitation (5) monté dans un corps de palier (7), qui porte un corps d'agitation (6) présentant un jeu de lames, pour la formation d'un écoulement circulaire autour du corps de palier (7), dans lequel la surface (8) du corps de palier (7) est réalisée sous forme de surface d'enveloppe tronconique, **caractérisé en ce que** la surface (8) présente une structure de surface (9, 10, 11) qui perturbe la formation d'une couche limite laminaire, la structure de surface (9, 10, 11) présentant à cet effet plusieurs éléments de structure de surface agencés sur la surface (8) par ailleurs lisse, à distance les uns des autres dans la direction de l'écoulement, sous la forme de nervures (11) ou de rainures (9) qui s'étendent dans la direction de génératrices de la surface d'enveloppe tronconique ou sous la forme de renfoncements (9, 10) ou de renflements (11) d'une hauteur de 1 mm à 3 mm, et qui se raccordent à la surface d'enveloppe tronconique sans pli de manière arrondie ou en formant une arête.
